(19) Europäisches Patentamt
European Patent Office
Office européen des brevets

(11) **EP 1 399 525 B1**

(12) **FASCICULE DE BREVET EUROPEEN**

(45) Date de publication et mention
de la délivrance du brevet:
**31.10.2007 Bulletin 2007/44**

(21) Numéro de dépôt: **02745516.1**

(22) Date de dépôt: **12.06.2002**

(51) Int Cl.:
*C09K 11/02* (2006.01)      *C09K 11/84* (2006.01)

(86) Numéro de dépôt international:
**PCT/FR2002/002010**

(87) Numéro de publication internationale:
**WO 2002/100976 (19.12.2002 Gazette 2002/51)**

(54) **COMPOSE A BASE D'UN ALCALINO-TERREUX, DE SOUFRE ET D'ALUMINIUM, DE GALLIUM OU D'INDIUM, SON PROCEDE DE PREPARATION ET SON UTILISATION COMME LUMINOPHORE**

VERBINDUNG AUF DER BASIS VON ERDALKALI, SCHWEFEL UND ALUMINIUM, GALLIUM ODER INDIUM, VERFAHREN ZU SEINER HERSTELLUNG UND SEINE VERWENDUNG ALS LUMINOPHOR

COMPOUND BASED ON AN ALKALINE-EARTH, SULPHUR AND ALUMINIUM, GALLIUM OR INDIUM, METHOD FOR PREPARING SAME AND USE THEREOF AS LUMINOPHORE

(84) Etats contractants désignés:
**AT BE CH CY DE DK ES FI FR GB GR IE IT LI LU MC NL PT SE TR**

(30) Priorité: **13.06.2001 FR 0107733**

(43) Date de publication de la demande:
**24.03.2004 Bulletin 2004/13**

(73) Titulaires:
• **Rhodia Electronics and Catalysis**
**17041 La Rochelle Cedex (FR)**
• **Le Mercier, Thierry**
**75013 Paris (FR)**
• **Le Roux, Olivier**
**93110 Rosny-sous-Bois (FR)**

(72) Inventeurs:
• **LE MERCIER, Thierry**
**F-75013 Paris (FR)**
• **LE ROUX, Olivier**
**93110 Rosny-sous-Bois (FR)**

(74) Mandataire: **Dubruc, Philippe**
**Rhodia Services,**
**Direction de la Propriété Industrielle,**
**40, rue de la Haie-Coq**
**93306 Aubervilliers Cedex (FR)**

(56) Documents cités:
**EP-A- 0 667 383        EP-A- 0 720 418**
**WO-A-01/95400          FR-A- 2 755 122**

• **DAVOLOS M R ET AL: "LUMINESCENCE OF EU2+ IN STRONTIUM AND BARIUM THIOGALLATES" JOURNAL OF SOLID STATE CHEMISTRY, ORLANDO, FL, US, vol. 83, no. 2, 1 décembre 1989 (1989-12-01), pages 316-323, XP000610995 ISSN: 0022-4596**
• **LE THI K T ET AL: "INVESTIGATION OF THE MS-AL2S3 SYSTEMS (M=CA, SR, BA) AND LUMINESCENCE PROPERTIES OF EUROPIUM-DOPED THIOALUMINATES" MATERIALS SCIENCE AND ENGINEERING B, ELSEVIER SEQUOIA, LAUSANNE, CH, vol. B14, no. 4, 1 septembre 1992 (1992-09-01), pages 393-397, XP000359265 ISSN: 0921-5107**

EP 1 399 525 B1

**Description**

La présente invention concerne un composé à base d'un alcalino-terreux, de soufre et d'aluminium, de gallium ou d'indium, son procédé de préparation et son utilisation comme luminophore.

Les domaines de la luminescence et de l'électronique connaissent actuellement des développements importants. On peut citer comme exemple de ces développements, la mise au point des systèmes cathodoluminescents pour les nouvelles techniques de visualisation et d'éclairage. Une application concrète est celle du remplacement des écrans de télévision actuels par des écrans plats. Ces nouvelles applications nécessitent des matériaux luminophores présentant des propriétés de plus en plus améliorées.

Comme luminophores on connaît en particulier les thiogallates d'alcalino-terreux. Ces produits peuvent être préparés notamment par atomisation d'une solution ou d'une suspension des éléments constitutifs du thiogallate autres que le soufre puis par sulfuration du produit atomisé. Les produits ainsi obtenus présentent déjà de bonnes propriétés de luminescence.

L'objet de l'invention est d'améliorer encore ces propriétés.

Dans ce but, le composé de l'invention est un composé à base d'au moins un élément A choisi parmi les alcalino-terreux, d'au moins un élément B choisi parmi l'aluminium, le gallium ou l'indium, de soufre et d'un dopant susceptible de conférer des propriétés de luminescence audit composé, et il est caractérisé en ce qu'il se présente sous la forme d'un mélange d'une phase cristallographique majoritaire de type $AB_2S_4$ et d'une phase cristallographique de type $B_2S_3$.

L'invention concerne aussi un procédé de préparation d'un tel composé qui est caractérisé en ce qu'il comporte les étapes suivantes :

- on forme une solution ou une suspension comprenant des sels ou des sols des éléments A, B et du dopant, dans une proportion telle que le rapport atomique B/(A+dopant) soit d'au moins 2,06;
- on sèche par atomisation la solution ou la suspension;
- on sulfure le produit obtenu à l'étape précédente.

Enfin, l'invention concerne l'utilisation comme luminophore, notamment en cathodoluminescence, d'un composé tel que décrit plus haut.

D'autres caractéristiques, détails et avantages de l'invention apparaîtront encore plus complètement à la lecture de la description qui va suivre et du dessin annexé dans lequel :

- la figure 1 est un diagramme RX d'un composé selon l'invention;
- la figure 2 est un diagramme RX d'un composé selon l'art antérieur.

La classification périodique des éléments à laquelle il est fait référence pour l'ensemble de la description, est celle publiée dans le Supplément au Bulletin de la Société Chimique de France n° 1 (janvier 1966).

Comme indiqué plus haut, le composé de l'invention est à base des éléments A, B, de soufre et d'un dopant.

A est un alcalino-terreux (groupe IIa de la classification périodique).

A peut être tout particulièrement le strontium. A peut être aussi le magnésium, le calcium ou le baryum.

B peut être l'aluminium, le gallium ou l'indium. B peut être plus particulièrement le gallium.

L'invention concerne aussi les composés dans lesquels A représente plusieurs alcalino-terreux. De même, B peut représenter une combinaison d'au moins deux des éléments aluminium, gallium ou indium.

Le composé de l'invention comprend un ou plusieurs dopants. On entend ici par dopant tout élément pouvant conférer des propriétés de luminescence au composé de l'invention. Ces dopants sont bien connus dans la technique concernée ici. Sans vouloir être limité par une théorie, on peut penser que le dopant vient en substitution de l'alcalino-terreux A. La quantité de dopant est habituellement d'au plus 10% atomique par rapport à l'élément alcalino-terreux. Plus particulièrement, ce dopant peut être choisi parmi le manganèse divalent, les terres rares divalentes et le groupe comprenant les terres rares trivalentes en combinaison avec un alcalin. Dans le cas des terres rares trivalentes, la présence d'un alcalin est nécessaire pour compenser l'excès de charge dû à la terre rare. L'alcalin peut être plus particulièrement le sodium.

Par terre rare on entend les éléments du groupe constitué par l'yttrium et les éléments de la classification périodique de numéro atomique compris inclusivement entre 57 et 71.

Le dopant peut être plus particulièrement l'europium II, l'ytterbium II ou le cérium III en combinaison avec un alcalin.

Selon un mode de réalisation particulier, le composé de l'invention est un thiogallate de strontium dopé, ce dopant pouvant être tout particulièrement l'europium II.

La caractéristique essentielle du composé de l'invention est sa structure cristallographique telle que mise en évidence par la diffraction des rayons X. Plus précisément, le composé de l'invention présente une phase cristallographique majoritaire du type $AB_2S_4$ et une phase cristallographique de type $B_2S_3$. Les proportions respectives de ces phases peuvent varier. La phase de type $B_2S_3$ doit être présente dans une proportion suffisante pour pouvoir être mise en évidence sur un diagramme de rayons X.

Cette proportion de phase $B_2S_3$ va dépendre des quantités respectives des éléments A, B et de dopant mis en oeuvre lors de la préparation du composé. Ainsi, le composé de l'invention peut être obtenu par un procédé dans lequel on met en oeuvre les éléments A, B et le dopant dans une proportion telle que le rapport atomique B/(A+dopant) soit d'au moins 2,06, de préférence au moins 2,1. Ce rapport peut être plus particulièrement compris entre 2,06 et 2,25.

Le composé de l'invention peut présenter en outre un certain nombre de caractéristiques additionnelles qui vont maintenant être décrites.

Le composé peut être constitué de particules de taille moyenne d'au plus $10\mu$m. Pour l'ensemble de la description les caractéristiques de taille et de granulométrie sont mesurées par la technique de diffraction laser (répartition en volume).

Selon une variante avantageuse de l'invention, le composé peut présenter une répartition granulométrique resserrée. Ainsi, l'indice de dispersion $\sigma$/m est d'au plus 0,7. Il peut être plus particulièrement d'au plus 0,6.

On entend par indice de dispersion le rapport :

$$\sigma/m = (d_{84}-d_{16})/2d_{50}$$

dans lequel :

- $d_{84}$ est le diamètre des particules pour lequel 84% des particules ont un diamètre inférieur à $d_{84}$;
- $d_{16}$ est le diamètre des particules pour lequel 16% des particules ont un diamètre inférieur à $d_{16}$;
- $d_{50}$ est le diamètre moyen des particules.

Les composés de l'invention peuvent être constitués de particules de forme sensiblement sphérique et dont le diamètre correspond aux tailles moyennes qui ont été données ci-dessus.

Selon une autre variante de l'invention, le composé de l'invention peut présenter une faible teneur résiduelle en oxygène. Cette teneur résiduelle peut être d'au plus 1,5%, plus particulièrement d'au plus 1%. Elle est exprimée en poids d'oxygène par rapport au poids total du composé.

Selon encore une autre variante de l'invention, les particules constituant le composé peuvent aussi comprendre une couche de revêtement d'oxyde transparent, de préférence uniforme et d'épaisseur contrôlée .

Par oxyde transparent, on entend ici un oxyde qui, une fois déposé sur la particule sous la forme d'une pellicule plus ou moins fine, n'absorbe que peu ou pas du tout les rayons lumineux dans le domaine du visible. En outre, il convient de noter que le terme oxyde, qui est utilisé par commodité dans l'ensemble de la présente description concernant cette variante, doit être entendu comme couvrant également des oxydes du type hydraté.

Ces oxydes, ou oxydes hydratés, peuvent être amorphes et/ou cristallisés.

A titre d'exemple de tels oxydes, on peut plus particulièrement citer l'oxyde de silicium (silice), l'oxyde d'aluminium (alumine), l'oxyde de zirconium (zircone), l'oxyde de titane, le silicate de zirconium $ZrSiO_4$ (zircon) et les oxydes de terres rares. Selon une variante préférée, la couche enrobante est à base de silice. De manière encore plus avantageuse, cette couche est essentiellement, et de préférence uniquement, constituée de silice.

Un procédé de préparation du composé de l'invention va maintenant être décrit.

La première étape de ce procédé consiste à former une solution ou une suspension comprenant des sels ou des sols des éléments A, B et du dopant.

On utilise habituellement des sels inorganiques comme les nitrates, les sulfates ou les chlorures ou encore les hydroxydes. On peut éventuellement utiliser des sels organiques mais il est préférable dans ce cas d'employer des sels présentant peu d'atomes de carbone, comme des acétates.

Les sels sont mis dans un milieu liquide, de préférence l'eau, pour former une solution ou une suspension.

Comme indiqué plus haut, et de manière à obtenir un composé présentant une phase cristallographique $B_2S_3$, on utilise une quantité de réactifs telle que l'élément B soit en excès par rapport à la stoechiométrie. Plus précisément, le rapport atomique B/(A+dopant) doit être d'au moins 2,06, de préférence d'au moins 2,1. Ce rapport peut être plus particulièrement compris entre 2,06 et 2,25.

L'étape suivante consiste à sécher la solution ou la suspension préalablement préparée. Ce séchage se fait par atomisation.

On entend par séchage par atomisation un séchage par pulvérisation du mélange dans une atmosphère chaude (spray-drying). L'atomisation peut être réalisée au moyen de tout pulvérisateur connu en soi, par exemple par une buse de pulvérisation du type pomme d'arrosoir ou autre. On peut également utiliser des atomiseurs dits à turbine. Sur les diverses techniques de pulvérisation susceptibles d'être mises en oeuvre dans le présent procédé, on pourra se référer notamment à l'ouvrage de base de MASTERS intitulé "SPRAY-DRYING" (deuxième édition, 1976, Editions George Godwin - London).

On notera que l'on peut également mettre en oeuvre l'opération d'atomisation-séchage au moyen d'un réacteur "flash", par exemple du type mis au point par la Demanderesse et décrit notamment dans les demandes de brevet français n° 2 257 326, 2 419 754 et 2 431 321. Dans ce cas, les gaz traitants (gaz chauds) sont animés d'un mouvement hélicoïdal et s'écoulent dans un puits-tourbillon. Le mélange à sécher est injecté suivant une trajectoire confondue avec l'axe de symétrie des trajectoires hélicoïdales desdits gaz, ce qui permet de transférer parfaitement la quantité de mouvement des gaz au mélange à traiter. Les gaz assurent ainsi en fait une double fonction : d'une part la pulvérisation, c'est à dire la transformation en fines gouttelettes, du mélange initial, et d'autre part le séchage des gouttelettes obtenues. Par ailleurs, le temps de séjour extrêmement faible (généralement inférieur à 1/10 de seconde environ) des particules dans le réacteur présente pour avantage, entre autres, de limiter d'éventuels risques de surchauffe par suite d'un contact trop long avec les gaz chauds.

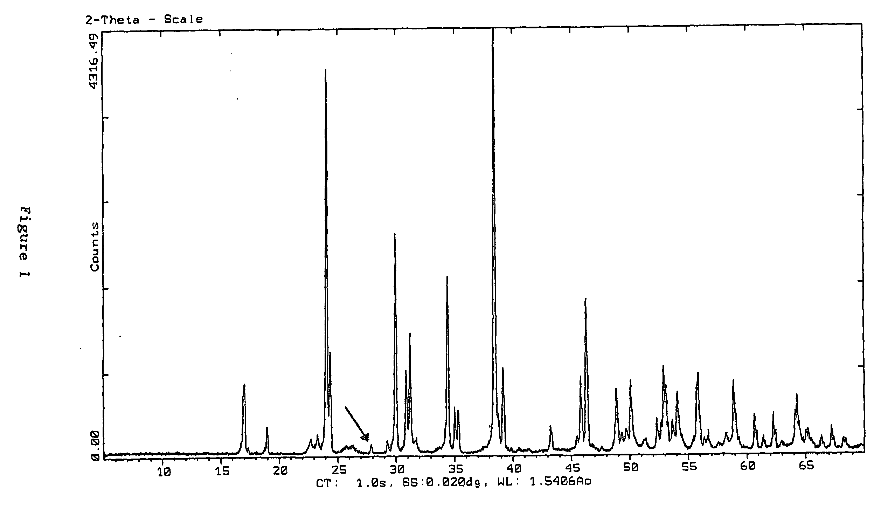

En ce qui concerne le réacteur flash mentionné plus haut, on pourra notamment se référer à la figure 1 de la demande de brevet français 2 431 321.

Celui-ci est constitué d'une chambre de combustion et d'une chambre de contact composée d'un bicône ou d'un cône tronqué dont la partie supérieure diverge. La chambre de combustion débouche dans la chambre de contact par un passage réduit.

La partie supérieure de la chambre de combustion est munie d'une ouverture permettant l'introduction de la phase combustible.

D'autre part la chambre de combustion comprend un cylindre interne coaxial, définissant ainsi à l'intérieur de celle-ci une zone centrale et une zone périphérique annulaire, présentant des perforations se situant pour la plupart vers la partie supérieure de l'appareil. La chambre comprend au minimum six perforations distribuées sur au moins un cercle, mais de préférence sur plusieurs cercles espacés axialement. La surface totale des perforations localisées dans la partie inférieure de la chambre peut être très faible, de l'ordre de 1/10 à 1/100 de la surface totale des perforations dudit cylindre interne coaxial.

Les perforations sont habituellement circulaires et présentent une épaisseur très faible. De préférence, le rapport du diamètre de celles-ci à l'épaisseur de la paroi est d'au moins 5, l'épaisseur minimale de la paroi étant seulement limitée par les impératifs mécaniques.

Enfin, un tuyau coudé débouche dans le passage réduit, dont l'extrémité s'ouvre dans l'axe de la zone centrale.

La phase gazeuse animée d'un mouvement hélicoïdal (par la suite appelée phase hélicoïdale) est composée d'un gaz, généralement de l'air, introduit dans un orifice pratiqué dans la zone annulaire, de préférence cet orifice est situé dans la partie inférieure de ladite zone.

Afin d'obtenir une phase hélicoïdale au niveau du passage réduit, la phase gazeuse est de préférence introduite à basse pression dans l'orifice précité, c'est-à-dire à une pression inférieure à 1 bar et plus particulièrement à une pression comprise entre 0,2 et 0,5 bar au-dessus de la pression existant dans la chambre de contact. La vitesse de cette phase hélicoïdale est généralement comprise entre 10 et 100 m/s et de préférence entre 30 et 60 m/s.

Par ailleurs, une phase combustible qui peut être notamment du méthane, est injectée axialement par l'ouverture précitée dans la zone centrale à une vitesse d'environ 100 à 150 m/s.

La phase combustible est enflammée par tout moyen connu, dans la région où le combustible et la phase hélicoïdale sont en contact.

Par la suite, le passage imposé des gaz dans le passage réduit se fait suivant un ensemble de trajectoires confondues avec des familles de génératrices d'un hyperboloïde. Ces génératrices reposent sur une famille de cercles, d'anneaux de petite taille localisés près et au-dessous du passage réduit, avant de diverger dans toutes les directions.

On introduit ensuite le mélange à traiter sous forme de liquide par le tuyau précité. Le liquide est alors fractionné en une multitude de gouttes, chacune d'elle étant transportée par un volume de gaz et soumise à un mouvement créant un effet centrifuge. Habituellement, le débit du liquide est compris entre 0,03 et 10 m/s.

Le rapport entre la quantité de mouvement propre de la phase hélicoïdale et celle du mélange liquide doit être élevé. En particulier il est d'au moins 100 et de préférence compris entre 1000 et 10000. Les quantités de mouvement au niveau du passage réduit sont calculées en fonction des débits d'entrée du gaz et du mélange à traiter, ainsi que de la section dudit passage. Une augmentation des débits entraîne un grossissement de la taille des gouttes.

Dans ces conditions, le mouvement propre des gaz est imposé dans sa direction et son intensité aux gouttes du mélange à traiter, séparées les unes des autres dans la zone de convergence des deux courants. La vitesse du mélange liquide est de plus réduite au minimum nécessaire pour obtenir un flot continu.

L'atomisation se fait généralement avec une température de sortie du solide comprise entre 90°C et 300°C.

Le produit ainsi obtenu à l'issue de l'atomisation peut être éventuellement désaggloméré, par exemple par micronisation.

La dernière étape du procédé consiste à sulfurer le produit obtenu à l'issue du séchage.

Cette sulfuration peut être effectuée en faisant réagir le produit obtenu à l'étape précédente avec du sulfure de carbone, du sulfure d'hydrogène ou avec un mélange de sulfure d'hydrogène et de sulfure de carbone. La réaction de sulfuration est conduite à une température comprise entre 600°C et 1000°C, de préférence entre 800°C et 900°C.

Dans le cas d'un mélange de sulfure d'hydrogène et de sulfure de carbone, les proportions respectives de $CS_2$ et de $H_2S$ peuvent varier dans de larges proportions. Habituellement, le débit de gaz sulfurant ($CS_2$, $H_2S$ ou $CS_2$ et $H_2S$) est choisi de telle sorte que la quantité de $CS_2$ et/ou $H_2S$ injectée dans le système pendant la réaction, c'est à dire entre le début de la montée en température (début du cycle thermique) et la fin du palier haute température soit suffisante pour transformer la totalité du précurseur en sulfure. Généralement, un rapport molaire ([gaz sulfurant] / [A] + [B]) supérieur à 4 permet de répondre à cette exigence.

Le gaz sulfurant peut être mis en oeuvre avec un gaz inerte comme l'argon ou l'azote.

La durée de la réaction correspond au temps nécessaire pour l'obtention du sulfure désiré.

A l'issue du chauffage, on récupère le sulfure formé qui constitue le composé de l'invention.

Dans le cas de la préparation d'un composé selon une des variantes décrites plus haut et comprenant un oxyde transparent, le procédé de préparation consiste essentiellement à mettre en contact le composé initial avec un précurseur de l'oxyde transparent précité et à précipiter l'oxyde transparent. On entend par composé initial, le composé tel qu'obtenu à la suite du procédé de préparation et de sulfuration décrit plus haut et après désagglomération éventuelle.

Dans le cas de la silice on peut mentionner la préparation de la silice par hydrolyse d'un alkyl-silicate, en formant un milieu réactionnel par mélange d'eau, d'alcool, du composé qui est alors mis en suspension, et éventuellement d'une base, d'un fluorure alcalin ou d'un fluorure d'ammonium qui peut jouer le rôle de catalyseur de la condensation du silicate. On introduit ensuite l'alkyl-silicate. On peut encore effectuer une préparation par réaction du composé, d'un silicate, du type silicate alcalin, et d'un acide.

Dans le cas d'une couche à base d'alumine, on peut faire réagir le composé, un aluminate et un acide, ce par quoi on précipite de l'alumine. Cette précipitation peut aussi être obtenue en mettant en présence et en faisant réagir le composé, un sel d'aluminium et une base.

Enfin, on peut former l'alumine par hydrolyse d'un alcoolate d'aluminium.

Pour ce qui est de l'oxyde de titane, on peut le précipiter en introduisant dans une suspension hydroalcoolique du composé un sel de titane d'une part tel que $TiCl_4$, $TiOCl_2$ ou $TiOSO_4$, et une base d'autre part. On peut aussi opérer par exemple par hydrolyse d'un titanate d'alkyle ou précipitation d'un sol de titane.

Enfin, dans le cas d'une couche à base d'oxyde de zirconium, il est possible de procéder par cohydrolyse ou coprécipitation d'une suspension du composé en présence d'un composé organométallique du zirconium, par exemple un alcoxyde de zirconium comme l'isopropoxyde de zirconium.

Le composé de l'invention peut être utilisé comme luminophore, notamment en cathodoluminescence, c'est à dire dans des applications mettant en oeuvre des excitations du type électronique. Dans ce cas, il peut être utilisé dans la fabrication de tout dispositif fonctionnant sous ce principe comme les écrans plats FED ou VFD, les écrans à projection, les écrans de télévision. Ce composé peut aussi être employé comme luminophore photoluminescent, par exemple dans les pcLEDs (phosphors converted Light Emission Diode) où l'excitation peut être comprise entre 350nm et 470nm.

La mise en oeuvre des composés de l'invention dans ce type de dispositifs se fait selon des techniques bien connus, par exemple par dépôt sur les écrans par sédimentation, sérigraphie ou électrophorèse.

L'invention s'applique enfin aux dispositifs précités mettant en oeuvre la cathodoluminescence ou la photoluminescence et comprenant un composé selon l'invention.

Des exemples vont maintenant être donnés.

Dans ces exemples, la granulométrie a été déterminée selon la technique laser précitée en utilisant un appareil Coulter® LS 230. On précise en plus que la mesure a été effectuée sur une dispersion du produit dans une solution aqueuse à 0,1% en poids d'hexamétaphosphate de sodium et qui a préalablement subi un passage à la sonde à ultra-sons (sonde avec embout de 13mm de diamètre, 20KHz, 120W) pendant 3 minutes.

Par ailleurs, les conditions de mesure de photoluminescence des produits sont les suivantes.

Les mesures de photoluminescence sont réalisées à l'aide d'une source lumineuse qui émet entre 200 et 800 nm. L'appareil de mesure comprend en excitation un double monochromateur placé avant l'échantillon afin que l'excitation de l'échantillon soit monochromatique.

Les mesures de rendement sont réalisées en comparant l'intensité des spectres d'émission au maximum du pic d'émission (533 nm). La forme et la position spectrale du spectre d'émission sont indépendantes de la composition chimique du produit et de la longueur d'onde d'excitation dans toute la gamme spectrale étudiée. Seule l'intensité du spectre est modifiée. Cette émission correspond à la bande 4f-5d de l'europium divalent dans un environnement $SrGa_2S_4$.

Les spectres d'émission sont obtenus en fixant la longueur d'onde d'excitation à 254nm et 460nm. Ces spectres sont corrigés de l'absorption des réseaux présents dans le spectrofluorimètre et de la variation de sensibilité du photomultiplicateur.

EXEMPLE 1

Cet exemple concerne la préparation d'un composé de formule $(Sr_{0,95}Eu_{0,05})Ga_{2,1}S_4$.

Un mélange de nitrates de gallium, de strontium et d'europium dans les proportions correspondantes à celles du composé recherché est atomisé sur un appareil LEA 100® du type réacteur "flash" décrit ci-dessus. La température d'entrée de l'air est de 500°C alors que la température de sortie de l'air est de 200°C.

40g de la poudre obtenue sont placés dans une nacelle en silice qui est ensuite mise en rotation dans un four de sulfuration (3t/mn). Le mélange gazeux réactionnel est constitué d'argon (52% en volume), de $CS_2$ (23%) et d' $H_2S$ (25%). Le débit du mélange gazeux est de 1,7l/mn.

Le cycle thermique est le suivant : montée à 8°C/min de l'ambiante jusqu'à 870°C puis palier de 10 minutes, puis descente à 5°C/min sous argon.

Le produit se présente sous la forme d'une poudre contenant majoritairement la phase $SrGa_2S_4$ et des traces de la phase $Ga_2S_3$. La phase $Ga_2S_3$ est détectée en RX en particulier par sa raie 100 à 3,20Å soit $2\theta=27,86$ avec une anode en cuivre de longueur d'onde 1,5418 Å. Le diagramme RX correspondant est celui de la figure 1, la raie 100 étant repérée par une flèche. La taille moyenne des particules est de 3,4μm. L'indice de dispersion est de 0,6.

EXEMPLE 2 COMPARATIF

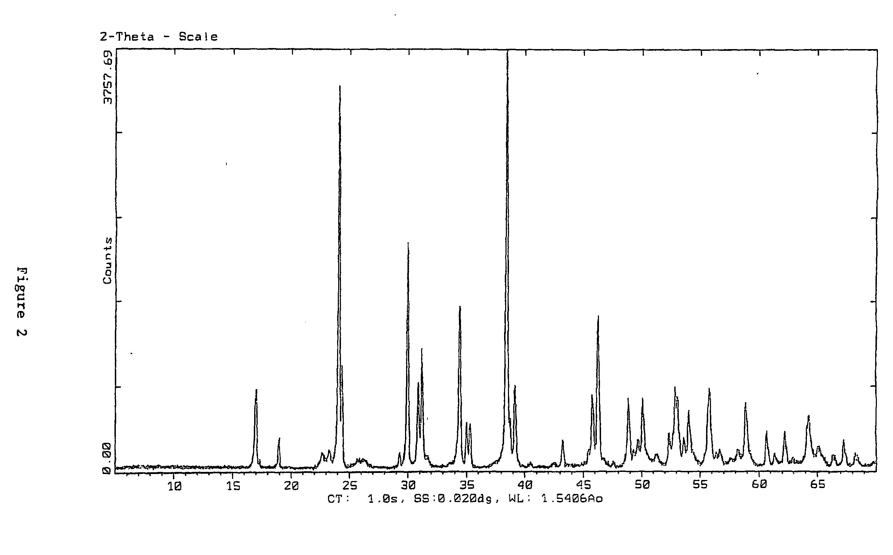

On procède comme dans l'exemple 1 mais on prépare un composé de formule $(Sr_{0,95}Eu_{0,05})Ga_2S_4$ sans excès stoechiométrique de gallium. Le diagramme RX du produit (Figure 2) montre qu'il est phasiquement pur.

Le produit de l'exemple 1 présente par rapport à celui de l'exemple 2 un rendement de photoluminescence à 254nm et 460nm qui est multiplié par 1,7 pour chacune de ces deux longueurs d'onde.

EXEMPLES 3 A 5

On procède comme dans l'exemple 1 mais en faisant varier la quantité de gallium. Ainsi pour les exemples 3, 4 et 5, on utilise le gallium dans les proportions correspondantes à celles des composés $(Sr_{0,95}Eu_{0,05})Ga_{2+x}S_4$ dans lesquels les valeurs de x sont de 0,06; 0,14 et 0,2 respectivement.

Les produits se présentent sous la forme d'une poudre contenant majoritairement la phase $SrGa_2S_4$ et des traces de la phase $Ga_2S_3$. La raie 100 de la phase $Ga_2S_3$ détectée en RX a une intensité croissante lorsque x varie de 0,06 à 0,2.

On compare les rendements de photoluminescence à 254nm de ces produits par rapport à celui de l'exemple 2. Pour les produits 3, 4 et 5, c'est à dire pour les valeurs de x respectives de 0,06; 0,14 et 0,2, le rendement est multiplié par 1,6; 1,7 et 1,7 respectivement par rapport au produit de l'exémple comparatif. Les rendements à 460nm sont multipliés par les mêmes facteurs respectifs.

**Revendications**

1. Composé à base d'au moins un élément A choisi parmi les alcalino-terreux, d'au moins un élément B choisi parmi l'aluminium, le gallium ou l'indium, de soufre et d'un dopant susceptible de conférer des propriétés de luminescence audit composé, **caractérisé en ce qu'**il se présente sous la forme d'un mélange d'une phase cristallographique majoritaire de type $AB_2S_4$ et d'une phase cristallographique de type $B_2S_3$.

2. Composé selon la revendication 1, **caractérisé en ce que** l'élément B est le gallium.

3. Composé selon la revendication 1 ou 2, **caractérisé en ce que** l'élément A est le strontium.

4. Composé selon l'une des revendications précédentes, **caractérisé en ce qu'**il s'agit d'un thiogallate de strontium dopé.

5. Composé selon l'une des revendications précédentes, **caractérisé en ce que** le dopant est choisi parmi le manganèse divalent, les terres rares divalentes et le groupe comprenant les terres rares trivalentes en combinaison avec un alcalin, le dopant pouvant être plus particulièrement l'europium II, l'ytterbium II ou le cérium III en combinaison avec un alcalin.

6. Composé selon la revendication 4 ou 5, **caractérisé en ce que** le dopant est une terre rare trivalente en combinaison avec le sodium.

7. Composé selon la revendication 4, **caractérisé en ce que** le dopant est l'europium II.

8. Composé selon l'une des revendications précédentes, **caractérisé en ce qu'**il est obtenu par un procédé dans lequel on met en oeuvre les éléments A, B et le dopant dans une proportion telle que le rapport atomique B/(A+dopant) soit d'au moins 2,06 et plus particulièrement compris entre 2,06 et 2,25.

9. Composé selon l'une des revendications précédentes, **caractérisé en ce qu'**il est constitué de particules de taille moyenne d'au plus 10μm.

10. Composé selon l'une des revendications précédentes, **caractérisé en ce qu'**il présente un indice de dispersion d'au plus 0,7, plus particulièrement d'au plus 0,6.

11. Composé selon l'une des revendications précédentes, **caractérisé en ce qu'**il est constitué de particules de forme sphérique.

12. Composé selon l'une des revendications précédentes, **caractérisé en ce qu'**il présente une teneur résiduelle en oxygène d'au plus 1,5%, plus particulièrement d'au plus 1 %.

13. Composé selon l'une des revendications précédentes, **caractérisé en ce qu'**il répond à la formule $(Sr_{0,95}Eu_{0,05})Ga_{2+x}S_4$ dans laquelle x = 0,06; 0,1; 0,14 ou 0,2.

14. Composé selon l'une des revendications précédentes, **caractérisé en ce que** les particules le constituant comprennent une couche de revêtement d'oxyde transparent, plus particulièrement une couche d'oxyde de silicium, d'oxyde d'aluminium, d'oxyde de zirconium, d'oxyde de titane, de silicate de zirconium ou d'un oxyde de terres rares.

15. Procédé de préparation d'un composé selon l'une des revendications précédentes, **caractérisé en ce**

**qu'**il comporte les étapes suivantes :

- on forme une solution ou une suspension comprenant des sels ou des sols des éléments A, B et du dopant, dans une proportion telle que le rapport atomique B/(A+dopant) soit d'au moins 2,06;
- on sèche par atomisation la solution ou la suspension;
- on sulfure le produit obtenu à l'étape précédente.

16. Procédé selon la revendication 15, **caractérisé en ce qu'**on sulfure le produit issu de l'atomisation en le faisant réagir avec du sulfure de carbone ou avec un mélange de sulfure d'hydrogène et de sulfure de carbone.

17. Procédé selon la revendication 16, **caractérisé en ce qu'**on conduit la réaction avec le sulfure de carbone ou avec le mélange gazeux précité à une température comprise entre 600°C et 1000°C.

18. Procédé selon l'une des revendications 15 à 17, **caractérisé en ce qu'**on utilise comme sels des nitrates.

19. Utilisation comme luminophore, notamment en cathodoluminescence ou en photoluminescence, d'un composé selon l'une des revendications 1 à 14.

20. Dispositif mettant en oeuvre la cathodoluminescence ou la photoluminescence, **caractérisé en ce qu'**il comprend un composé selon l'une des revendications 1 à 14.

**Claims**

1. Compound based on at least one element A chosen from alkaline-earth metals, on at least one element B chosen from aluminium, gallium and indium, on sulphur and on a dopant capable of giving the said compound luminescence properties, **characterized in that** it is in the form of a mixture of predominantly an $AB_2S_4$-type crystallographic phase and a $B_2S_3$-type crystallographic phase.

2. Compound according to Claim 1, **characterized in that** the element B is gallium.

3. Compound according to Claim 1 or 2, **characterized in that** the element A is strontium.

4. Compound according to one of the preceding claims, **characterized in that** it is a doped strontium thiogallate.

5. Compound according to one of the preceding claims, **characterized in that** the dopant is chosen from divalent manganese, divalent rare-earth metals and the group comprising trivalent rare-earth metals in combination with an alkali metal, the dopant possibly being more particularly europium$^{II}$, ytterbium$^{II}$ or cerium$^{III}$ in combination with an alkali metal.

6. Compound according to Claim 4 or 5, **characterized in that** the dopant is a trivalent rare-earth metal in combination with sodium.

7. Compound according to Claim 4, **characterized in that** the dopant is europium$^{II}$.

8. Compound according to one of the preceding claims, **characterized in that** it is obtained by a process in which the elements A, B and the dopant are used in a proportion such that the B/(A + dopant) atomic ratio is at least 2.06 and more particularly between 2.06 and 2.25.

9. Compound according to one of the preceding claims, **characterized in that** it consists of particles having a mean size of at most 10 $\mu$m.

10. Compound according to one of the preceding claims, **characterized in that** it has a dispersion index of at most 0.7, more particularly at most 0.6.

11. Compound according to one of the preceding claims, **characterized in that** it consists of particles having a spherical shape.

12. Compound according to one of the preceding claims, **characterized in that** it has a residual oxygen content of at most 1.5%, more particularly at most 1%.

13. Compound according to one of the preceding claims, **characterized in that** it satisfies the formula $(Sr_{0.95}Eu_{0.05})Ga_{2+x}S_4$, in which x = 0.06; 0.1; 0.14 or 0.2.

14. Compound according to one of the preceding claims, **characterized in that** the particles constituting it include a transparent oxide coating layer, more particularly a silicon oxide, aluminium oxide, zirconium oxide, titanium oxide, zirconium silicate or rare-earth metal oxide layer.

15. Method of preparing a compound according to one of the preceding claims, **characterized in that** it comprises the following steps:

- a solution or suspension containing salts or sols of the elements A, B and of the dopant is formed, in a proportion such that the B/(A+dopant) atomic ratio is at least 2.06;

- the solution or suspension is spray-dried; and
- the product obtained in the previous step is sulphurized.

16. Method according to Claim 15, **characterized in that** the product obtained from the spray drying is sulphurized by making it react with carbon disulphide or with a mixture of hydrogen sulphide and carbon disulphide.

17. Method according to Claim 16, **characterized in that** the reaction with carbon disulphide or with the aforementioned gas mixture is carried out at a temperature between 600°C and 1000°C.

18. Method according to one of Claims 15 to 17, **characterized in that** nitrates are used as salts.

19. Use as a phosphor, especially in cathodoluminescence or photoluminescence, of a compound according to one of Claims 1 to 14.

20. Cathodoluminescent or photoluminescent device, **characterized in that** it comprises a compound according to one of Claims 1 to 14.


**Patentansprüche**

1. Verbindung auf Basis von mindestens einem unter den Erdalkalimetallen ausgewählten Element A, mindestens einem unter Aluminium, Gallium oder Indium ausgewählten Element B, Schwefel und einem Dotierstoff, der dazu befähigt ist, der Verbindung Lumineszenzeigenschaften zu verleihen, **dadurch gekennzeichnet, daß** sie in Form einer Mischung einer überwiegenden kristallographischen Phase vom Typ $AB_2S_4$ und einer kristallographischen Phase vom Typ $B_2S_3$ vorliegt.

2. Verbindung nach Anspruch 1, **dadurch gekennzeichnet, daß** es sich bei dem Element B um Gallium handelt.

3. Verbindung nach Anspruch 1 oder 2, **dadurch gekennzeichnet, daß** es sich bei dem Element A um Strontium handelt.

4. Verbindung nach einem der vorhergehenden Ansprüche, **dadurch gekennzeichnet, daß** es sich um ein dotiertes Strontiumthiogallat handelt.

5. Verbindung nach einem der vorhergehenden Ansprüche, **dadurch gekennzeichnet, daß** der Dotierstoff unter zweiwertigem Mangan, zweiwertigen Seltenerdmetallen und der Gruppe enthaltend die dreiwertigen Seltenerdmetalle in Kombination mit einem Alkalimetall ausgewählt ist, wobei es sich bei dem Dotierstoff insbesondere um Europium(II), Ytterbium(II) oder Cer(III) in Kombination mit einem Alkalimetall handeln kann.

6. Verbindung nach Anspruch 4 oder 5, **dadurch gekennzeichnet, daß** es sich bei dem Dotierstoff um ein dreiwertiges Seltenerdmetall in Kombination mit Natrium handelt.

7. Verbindung nach Anspruch 4, **dadurch gekennzeichnet, daß** es sich bei dem Dotierstoff um Europium(II) handelt.

8. Verbindung nach einem der vorhergehenden Ansprüche, **dadurch gekennzeichnet, daß** sie durch ein Verfahren erhalten wird, bei dem man die Elemente A und B und den Dotierstoff in einem solchen Verhältnis einsetzt, daß das Atomverhältnis B/(A + Dotierstoff) mindestens 2,06 beträgt und insbesondere zwischen 2,06 und 2,25 liegt.

9. Verbindung nach einem der vorhergehenden Ansprüche, **dadurch gekennzeichnet, daß** sie aus Teilchen mit einer mittleren Größe von höchstens 10 $\mu$m besteht.

10. Verbindung nach einem der vorhergehenden Ansprüche, **dadurch gekennzeichnet, daß** sie einen Dispersionsindex von höchstens 0,7 und insbesondere höchstens 0,6 aufweist.

11. Verbindung nach einem der vorhergehenden Ansprüche, **dadurch gekennzeichnet, daß** sie aus kugelförmigen Teilchen besteht.

12. Verbindung nach einem der vorhergehenden Ansprüche, **dadurch gekennzeichnet, daß** sie einen Sauerstoffrestgehalt von höchstens 1,5% und insbesondere höchstens 1% aufweist.

13. Verbindung nach einem der vorhergehenden Ansprüche, **dadurch gekennzeichnet, daß** sie der Formel $(Sr_{0,95}Eu_{0,05}) Ga_{2+x}S_4$ mit x = 0, 06; 0,1; 0,14 oder 0,2 entspricht.

14. Verbindung nach einem der vorhergehenden Ansprüche, **dadurch gekennzeichnet, daß** die Teilchen, aus denen sie besteht, eine Überzugsschicht aus transparentem Oxid und insbesondere eine Schicht aus Siliciumoxid, Aluminiumoxid, Zirconiumoxid, Titanoxid, Zirconiumsilicat oder einem Seltenerdmetalloxid umfassen.

15. Verfahren zur Herstellung einer Verbindung nach einem der vorhergehenden Ansprüche, **dadurch gekennzeichnet, daß** man:

    - eine Lösung oder Suspension, die Salze oder Sole der Elemente A und B und des Dotierstoffs in einem solchen Verhältnis enthält, daß das Atomverhältnis B/(A + Dotierstoff) mindestens 2,06 beträgt, herstellt;

- die Lösung oder Suspension durch Zerstäubung trocknet;

- das im vorhergehenden Schritt erhaltene Produkt sulfuriert.

16. Verfahren nach Anspruch 15, **dadurch gekennzeichnet, daß** man das Produkt aus der Zerstäubung sulfuriert, indem man es mit Kohlendisulfid oder mit einer Mischung aus Schwefelwasserstoff und Kohlendisulfid umsetzt.

17. Verfahren nach Anspruch 16, **dadurch gekennzeichnet, daß** man die Umsetzung mit dem Kohlendisulfid oder dem obigen Gasgemisch bei einer Temperatur zwischen 600°C und 1000°C durchführt.

18. Verfahren nach einem der Ansprüche 15 bis 17, **dadurch gekennzeichnet, daß** man als Salze Nitrate verwendet.

19. Verwendung einer Verbindung nach einem der Ansprüche 1 bis 14 als Leuchtstoff, insbesondere in der Kathodolumineszenz oder in der Photolumineszenz.

20. Vorrichtung unter Verwendung von Kathodolumineszenz oder Photolumineszenz, **dadurch gekennzeichnet, daß** sie eine Verbindung nach einem der Ansprüche 1 bis 14 enthält.

Figure 1

Figure 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2257326
- FR 2419754
- FR 2431321

**Littérature non-brevet citée dans la description**

- *Supplément au Bulletin de la Société Chimique de France,* Janvier 1966, (1
- SPRAY-DRYING. MASTERS. George Godwin, 1976